# EUROPEAN PATENT SPECIFICATION

(11) **EP 3 259 697 B1**
(45) Date of publication and mention of the grant of the patent: **22.05.2019**
(21) Application number: 16709293.1
(22) Date of filing: 16.02.2016
(51) Int. Cl.: G06F 21/53, G06F 21/55, G06F 11/36

(54) **MINING SANDBOXES**
BERGBAUSANDKÄSTEN
BACS À SABLE POUR EXPLORATION

(30) Priority: 16.02.2015 LU 92657
(43) Date of publication of application: 27.12.2017
(73) Proprietor: Universität des Saarlandes, 66123 Saarbrücken (DE)
(72) Inventor: ZELLER, Andreas, 66111 Saarbrücken (DE); JAMROZIK, Konrad, 66125 Saarbrücken (DE)
(74) Representative: Lecomte & Partners
(86) International application number: PCT/EP2016/053276
(87) International publication number: WO 2016/131830

(56) References cited:
- US-A1- 2007 113 270
- US-A1- 2009 313 699
- US-B1- 7 047 369
- RIYADH MAHMOOD ET AL: "A whitebox approach for automated security testing of Android applications on the cloud", AUTOMATION OF SOFTWARE TEST (AST), 2012 7TH INTERNATIONAL WORKSHOP ON, IEEE, 2 June 2012 (2012-06-02), pages 22-28, XP032451145, DOI: 10.1109/IWAST.2012.6228986 ISBN: 978-1-4673-1821-1

## Description

### Field of the invention

The present invention relates to the field of computer science and aims of enhancing the security of computer programs, which have access to computing resources of the computing device on which they are executed. In particular, the invention relates to sandboxing techniques, in which a computer program that is executed on a computing device has to comply with a plurality of execution rules.

### Background

Reference [22] discloses a method of analyzing the behavior of a computer program according to the preamble of claim 1.

The idea of restricting program operation to only the information and resources necessary to complete its operation goes back to the 1970s. As principle of least privilege [27], it has influenced the design of computer systems, operating systems, and information systems to improve stability, safety, security, and privacy. On the Android™ platform, least privilege is realized through sandboxing: First, no application can access the data of other applications. Second, access to shared user resources (such as location, contacts, etc.) is available through dedicated APIs only, which are guarded by permissions. Each application declares the permissions it needs; access to other APIs and resources is blocked by the operating system. In a landmark paper, Felt et al. [10] systematically tested Android™ APIs to check which permissions would refer to which API. Besides producing a map between APIs and permissions, they also found that 33% of Android™ apps investigated were overprivileged, that is, they requested more permissions than their APIs would actually require. PScout [2] uses a combination of static analysis and fuzz testing to extend this mapping to undocumented APIs, and found that 22% of permission requests were unnecessary if app developers confined themselves to documented APIs.

Android™ apps require more permissions than they need. On Android™, permissions have to be acknowledged by a user upon app installation; the Google™ play store also lists each app with the requested permissions. However, in a survey of 308 Android™ users, Felt et al. [11] found that only 17% paid attention to permissions during installation, and only 3% of all respondents could correctly answer three questions regarding permissions. This is the more worrying as in an analysis of 75,000 Android™ apps [32], 46% of all apps were asking for the phone's state permission, allowing apps to access (and potentially leak) the user's SIM card information, including the unique IMEI number.

Android™ permission warnings do not help most users make correct security decisions.

In contrast to specified rules and permissions, the alternative of extracting these from an existing system has always been compelling. In a short paper comparing the permission systems of mobile platforms [1], Au et al. call for "a tool that can automatically determine the permissions an application needs." This question generalizes into "What does an application do?", which is the general problem of program analysis.

Program analysis falls into two categories: static analysis of program code and dynamic analysis of executions. Static code analysis sets an upper bound to what a program can do: If static analysis determines some behavior is impossible, it can be safely excluded. The COPES tool [4] uses static analysis to eliminate unneeded permissions for a given Android™ app.

The challenge of static analysis is overapproximation: Because of the halting problem, the analysis must frequently assume that more behaviors are possible than actually would be. Furthermore, if code is deobfuscated, decrypted, interpreted, or downloaded at runtime only, all of which are common in the Android™ world, it will be inaccessible for static analysis.

Static analysis produces overapproximation. Dynamic analysis works on actual executions, and thus is not limited by code properties. In terms of program behavior, it sets a lower bound: Any (benign) behavior seen in past executions should be allowed in the future, too. Consequently, given a set of executions, one can learn program behavior from these and infer security policies. In their seminal 1996 paper [12], Forrest et al. learned "normal" behavior as short-range correlations in the system calls of a UNIX process, and were successfully able to detect common intrusions on the sendmail and Ipr programs. Since then, a number of techniques has been used for automatic intrusion detection, including statistical profiling [12], neural networks [16], finite state automata [28], support vector machines [19], and rule-based systems [20]. Chandola et al. [8] provide a detailed survey on techniques used.

Since Android™ programs come in interpretable bytecode, the platform offers several opportunities to monitor dynamic behavior, including system calls (AASandbox [6]), data flow (TAINTDROID [9]), traces (CROWDROID [7]), or CPU and network activity (ANDROMALY[29]); all these platforms can be used both to monitor application behavior (and report results to the user) as well as to detect malicious behavior (as a violation of explicit rules or as determined by a trained classifier).

Neuner et al. [25] provide a comprehensive survey of available techniques. The joint problem of all these approaches is the fundamental limitation of dynamic analysis, namely incompleteness: If some behavior has not been observed so far, there is no guarantee that it may not occur in the future. Given the high cost of false alarms, this implies that a sufficiently large set of executions must be available that covers known behaviors. Such a set can either come from tests (which then typically would be written or conducted at substantial effort), or from production (which then requires a training phase, possibly involving classification by humans). In the domain of network intrusion detection, the large variation of "benign" traffic in operational "real world" settings is seen as a prime reason why machine learning is rarely employed in practice [31]. Dynamic analysis requires sufficiently many "normal" executions to be trained with.

It is an object of the present invention to alleviate at least some of the problems that exist in the prior art.

### Summary of the invention

In accordance with the invention, a method of analyzing the behavior of a computer program is provided. The computer program is executable in an operating system by processing means of a computing device. The execution of predetermined parts of the computer program is triggered by events of at least one interface of the computer program, and leads the computer program to request access to computing resources, which are accessible by said computing device. The method comprises the steps of:
a) executing the computer program by processing means of a computing device;
b) using said processing means to automatically generate a plurality of events of said at least one interface;
c) identifying for each generated event, using said processing means, to which computing resources the computer program requests access as a consequence of the event;
d) storing, for each event, a description of the identified computing resources in a memory element, thereby associating the identified computing resources with the event;
e) providing an input to the computer program on at least one interface thereof, which results in an event triggering the execution of a predetermined part of the computer program;
f) identifying, for said event, using said processing means, the computing resources to which the computer program requests access as a consequence of the event;
g) comparing a description of the identified computing resources to all of the descriptions of computing resources associated with said event in said memory element;
h) if an associated description, which at least partially matches the description of the identified computing resources, is found in said memory element, concluding that the computer program exhibits a first behavior;
i) if no such associated description is found, concluding that the computer program exhibits a second behavior, which is different from said first behavior.

The processing means may for example comprise a central processing unit, CPU, which is programmable to execute the method step in accordance with the invention.

The first behavior may for example be the wanted or expected behavior of the computer program, whereas said second behavior may for example be a malicious behavior of the computer program, caused for example by the infection of the computer program by a computer virus.

A partial match may for example be identified, in the case of a binary description, if a subset of the digits forming the description of the identified computing resources matches the corresponding digits of the description of the associated, or learned, computing resources that correspond to the observed event. Descriptions may be automatically generated using known techniques.

A description may be a textual description readable and understandable by a human being.

Steps e-i may be called "sandboxing". The behavior of a computer program is observed and compared with the behavior that has been previously mined using step a-d. A deviation of the observed behavior from the learned behavior is identified by the method.

Preferably, in step (h) the method may conclude that the computer program exhibits said first behavior only if the description of the identified computing resources matches one of the descriptions associated with said event in said memory element.

Step (i) may further comprise blocking the requested access of the computer program to the identified computing resources.

Further, step (i) may preferably comprise updating the computing resources associated with said event in said memory element using the newly identified computing resources. The updating may be conditional on the approval of the user of the computer program, who is presented with a corresponding input query.

The input provided in step (e) may preferably be a user input.

The computing resources may preferably comprise any of a file system, file system descriptor, storage means, networking means, imaging means, processing means, display means or printing means.

Preferably, the interfaces may comprise a Graphical User Interface, GUI, and said events may advantageously comprise any of a mouse-click event, a text-entry event, a key-stroke event, a choice event, or any combination thereof.

The interfaces may further preferably comprise a networking interface and/or a sensor interface.

The identification of computing resources may preferably comprise identifying at least one call by the computer program to an Application Programming Interface, API, routine of the operating system, said routine providing access to a computing resource. The operating system may for example be the Android™ operating system or any other operating system. The method may alternatively use other known means for identifying an access request to a computing resource.

In step (b) the generated events may preferably be randomly generated.

Preferably, the description of said computing resources, which is stored in said memory element in step (d), may comprise a binary or a textual representation.

According to a further aspect of the invention, there is provided a computer program comprising instructions, which when run on a computer, causes the computer to carry out the method according to the invention.

According to another aspect of the invention, there is provided a computer program product comprising a computer-readable medium on which the computer program according to the invention is stored.

According to yet another aspect of the invention, a computer capable of carrying out the method according to the invention is provided.

According to a different aspect of the invention, there is provided a computing device comprising processing means and a memory element, said processing means being configured to execute the method according to the invention. The device may comprise first and second processing means for executing the computer program that is being monitored and for executing the method steps respectively. Alternatively, the computer program and the method according to the invention may be executed by the same processing means. The processing means may preferably comprise a central processing unit, CPU, while the memory element my comprise any known memory, of volatile or persistent type, for example a hard disk drive, a solid state drive, a random access memory or a database to which the processing means have read/write access. The database may or may not be physically collocated with the processing means. The database may be accessible to the processing means using a data communication channel.

To the best of the applicant's knowledge, the invention provides the first approach to leverage test generation to automatically extract sandbox rules from general-purpose applications. The approach has a number of advantages when compared to prior art solutions.

Preventing behavior changes. The mined sandbox detects behavior not seen during mining, reducing the attack surface for infections as well as for latent malicious behavior that otherwise would activate later.

Fully automatic. As soon as an interface for automatic test generation is available, such as a GUI, sandbox mining becomes fully automatic, too. Developers can easily mine and remine sandboxes at any time.

No training. In contrast to anomaly detection systems, no training is required in production, as the "normal" behavior would already be explored during testing. If an app accesses an external account, such as SNAPCHAT™, its login and password must be provided.

Detailed analysis. Mined sandboxes provide a much finer level of detail than what would normally be specified or documented in practice. As they refer to user resources and user actions, they are readable and understandable even by non-experts.

Adverse and obscure code. In contrast to static code analysis, test generation and monitoring are neither challenged by large programs nor thwarted by code that would be deobfuscated, decrypted, interpreted, or downloaded at runtime only.

Enforced completeness. The key issue with testing is that it is incomplete by construction. However, by disallowing behaviors not seen during testing, one can ensure that what behavior has been seen during testing is indeed all there is and will be.

Certification. Anyone can mine a sandbox for a given app and compare its rules against the sandboxes provided by vendors or app stores, or those of previous versions.

### Short description of the figures

Further advantages of the invention are described in what follows based on exemplary embodiments of the invention, and with reference to the accompanying figures, among which:
- Figure 1 illustrates the mining steps of the method according to the invention, wherein the method automatically generates tests for an application, monitors the accessed APIs and resources;
- Figure 2 illustrates the API calls of computer program, as discovered by a preferred embodiment of the invention, as a function of time;
- Figure 3 illustrates a confusion matrix: computer program behavior is either benign or malicious; if it is not seen during mining (test generation), it is prohibited during sandboxing; the two risks are false negatives (malicious behavior seen during testing, but not recognized as such) and false positives (benign behavior not seen during testing and thus prohibited during sandboxing);
- Figure 4 schematically illustrates a device configured to perform the steps of a preferred embodiment of the method according to the invention;
- Figure 5 is a flowchart illustrating the main steps of the method according to the invention in a preferred embodiment.

### Detailed description

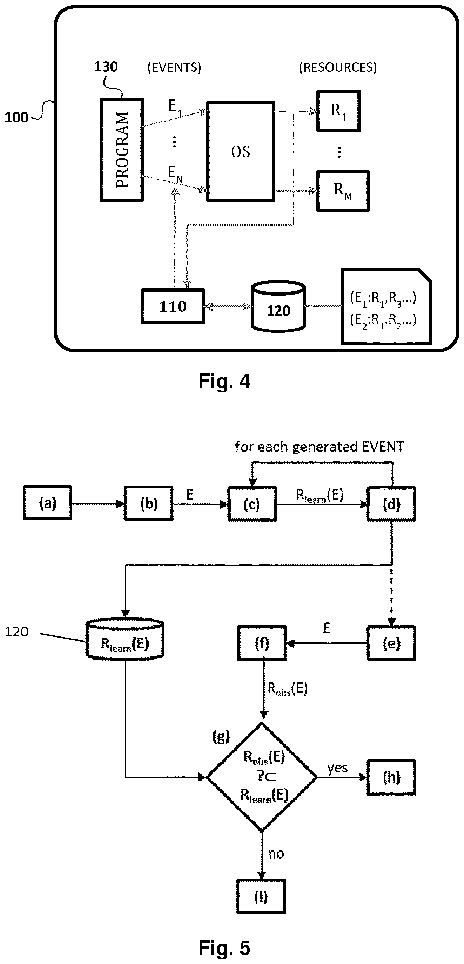

Figures 4 and 5 illustrate the main steps of the method according to the invention, and a device configured to perform the method steps, namely
a) executing a computer program 130 by processing means 110, such as a central processing unit, of a computing device 100;
b) using said processing means 110 to automatically generate a plurality of events (E₁, ... E_{N}) of said at least one interface;
c) identifying for each generated event, using said processing means 110, to which computing resources (R₁, .... R_{M}) the computer program 130 requests access as a consequence of the event;
d) storing, for each event, a description of the identified computing resources in a memory element 120, thereby associating the identified computing resources with the event.

These steps describe the learning or mining of the behavior of the computer program 130. The program may be any computer program that is executable on said device 100 and associated operating system. As steps (c) - (d) are performed for each generated event, after completion of these steps, the memory element 120 holds for each generated event a set of observed resources Rₗₑₐᵣₙ, to which the computer program has requested access as a consequence of the corresponding event. In the illustrated example, the set of observed resources Rₗₑₐᵣₙ for event E₁ comprises resources R₁, R₃, ...

Advantageously, the subsequent steps are defined as
e) providing an input to the computer program 130 on at least one interface thereof, which results in an event triggering the execution of a predetermined part of the computer program;
f) identifying, for said event, using said processing means 110, the computing resources R_{obs} to which the computer program requests access as a consequence of the event;
g) comparing a description of the identified computing resources R_{obs} to all of the descriptions of computing resources Rₗₑₐᵣₙ associated with said event in said memory element 120;
h) if an associated description Rₗₑₐᵣₙ, which at least partially matches the description R_{obs} of the identified computing resources, is found in said memory element 120, concluding that the computer program 130 exhibits a first behavior;
i) if no such associated description is found, concluding that the computer program 130 exhibits a second behavior, which is different from said first behavior.

Steps (e) - (i) are sandboxing steps, wherein the sandbox is provided by the behavior which has been learned by the method during earlier steps (a) - (d).

The following description provides an exemplary embodiment of the above method steps and illustrates several applications in which the method according to the invention finds its particular use. The described embodiment provides insight to the skilled person about how the method according to the invention may be implemented. However, the provided description of the embodiment is not limitative of the scope of the invention, which is defined by the appended claims.

### 1. Introduction

In order to protect the execution of a computer program against malicious behavior, one way is to place the program in a sandbox, restraining its access to potentially sensitive resources and services. On the Android™ platform, for instance, developers have to declare that an app needs access to specific resources. The popular SNAPCHAT™ picture messaging application, for instance, requires access to the internet, the camera, and the user's contacts; these permissions would be reviewed and acknowledged by the user upon download and install. If an application fails to declare a permission, the operating system denies access to the respective resource; if the SNAPCHAT™ app attempted to access e-mail or text messages, the respective API call would be denied by the Android™ system.

While such permissions are transparent to users, they may be too coarse-grained to prevent misuse. One common attack vector in Android™ apps is to have an app stealthily send text messages to premium numbers. SNAPCHAT™ can send a text message to validate the user's phone number, and thus requires permission to send text messages. Consequently, an attacker could take the original SNAPCHAT™ app, add code to it to stealthily send out text messages, and replace the original with the malicious variant; the new malicious behavior would still be in the bounds mandated by the sandbox. Likewise, the sandbox would not prevent SNAPCHAT™ from continuously monitoring the audio, the current location, and send all of this information over the internet-simply because the set permissions allow it. The issue could be addressed by tightening the sandbox-for instance, by constraining the conditions under which the app can send the message. But then, someone has to specify and validate these rules-and repeat this with each change to the app, as a sandbox that is too tight could disable important functionality.

The present invention uses sandbox mining, a technique to automatically extract sandbox rules from a given program.

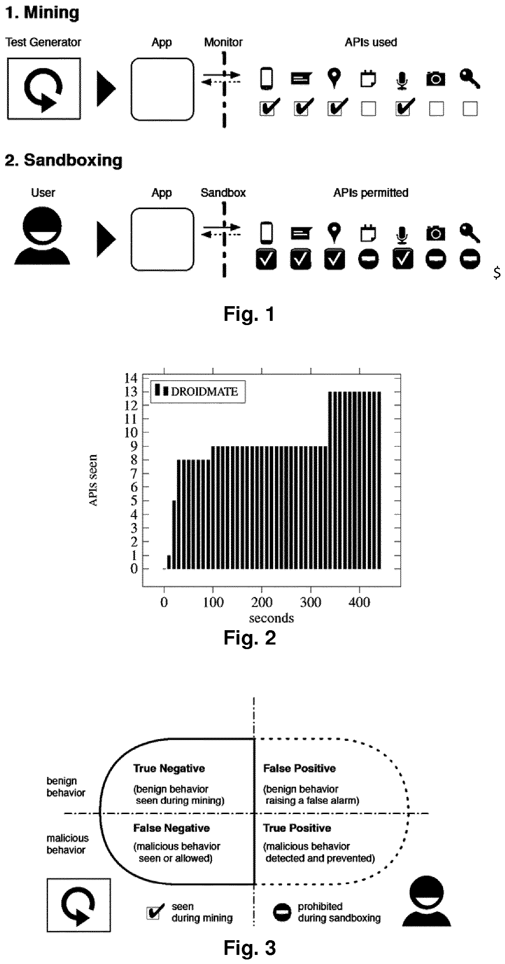

The core idea of the invention, illustrated in Figure 1, brings together two techniques, namely test generation and enforcement:
1. In the first phase, the rules/description that will make the sandbox are mined. An automatic test generator is used to systematically explore program behavior, monitoring all accesses to sensitive resources.
2. In the second phase, it is assumed that resources not accessed during testing should not be accessed in production either. Consequently, if the app (unexpectedly) requires access to a new resource, the sandbox will prohibit access, or put the request on hold until the user explicitly allows it.

To illustrate how the invention works in practice, a sandbox is mined from the SNAPCHAT™ example application. During systematic GUI testing, the mining phase determines that SNAPCHAT™ requires access to the camera, location, internet, and so on. These accesses are associated by the method according to the invention with the event that triggers them-that is, the individual GUI elements. Thus, only the "Send SMS" GUI button used to authenticate the phone number during setup would still actually be allowed to send a text message. The resulting sandbox then protects the user against unexpected behavior changes. One may for example assume to have a malicious SNAPCHAT™ variant, which sends out text messages to premium numbers. Replacing the original with the malicious variant (say, as part of an attack) would trigger the sandbox, as sending text messages in the background did not occur during mining. Even if an app like SNAPCHAT™ were malicious in the first place, and placed in an app store, the attacker would face a dilemma. If the app sends out text messages in the background right after the start, this would be detected in the mining phase, and thus made explicit as a sandbox rule permitting behavior; such a rule or description ("This app can send SMS messages to 1-900-PREMIUM in the background") would raise suspicions with any user. If, however, the app stays silent during mining, it would be completely disallowed from sending text messages in production.

The advantages of the invention can be tuned by the tightness of the sandbox rules, which depends on the number of rules learned in the first phase.
- Can test generators sufficiently cover behavior? If some resource R is not accessed during mining, any later non-malicious access to R would raise a false alarm-the sandbox is too tight.
- Can the attack surface be sufficiently reduced? If the rules that are mined are too general, there might still be too many ways for applications to behave maliciously-the sandbox is too coarse.

To answer these questions, a prototype implementation of sandbox mining for the ANDROID™ platform has been developed. The so-called BOXMATE tool combines state-of-the-art tools for test generation and monitoring in a single, user-friendly package. In the remainder of this description, the BOXMATE embodiment to illustrate and evaluate the concept of sandbox mining in accordance with the present invention.

While a preferred embodiment named BOXMATE is used to describe the concepts of the present invention, the invention is in now ways limited to this exemplary embodiment. The skilled person will know that the described invention may be readily implemented on other operating system platforms based on the information provided by the present description.

### 2. BOXMATE = Sandbox mining, analysis, testing and enforcement

### 2.1 Test Generation

Rather than writing tests or collect executions during production, one can also generate them. In the security domain, the main purpose of such generated executions is to find bugs. Introduced by Miller et al. [23], fuzz testing automatically exercises sensitive tools and APIs with random inputs; no interaction or annotation is required. Today, fuzz testing is one of the prime methods to find vulnerabilities: The Microsoft™ SAGE fuzzing tool [13], for instance, "has saved millions of dollars to Microsoft™, as well as to the world in time and energy, by avoiding expensive security patches to more than 1 billion PCs." [14].

For the Android™ platform, recent years have seen a raise of powerful test generators exercising Android™ apps. MONKEY [24] is a simple fuzz tester, generating random streams of user events such as clicks, touches, or gestures; although typically used as robustness tester, it has been used to find GUI bugs [18] and security bugs [22]. While MONKEY generates pure random events, the DYNODROID tool [21] focuses on those events handled by an app, getting higher coverage while needing only 1/20 of the events. Given an app, all these tools run fully automatically; no model, code, or annotation is required.

The most recent ANDROID™ test generators have achieved high levels of robustness: PUMA [17] has run dynamic analysis on 3,600 apps from the Google™ Play store, translating Dalvik to Java bytecode and back; the ANDLANTIS system [5] is reported to be able to process over 3,000 Android™ applications per hour. The aim of these systems is to apply dynamic analysis on several applications, summarizing data and possibly detect outliers in terms of dynamic behavior.

All these testing tools still share the fundamental limitation of execution analysis: If a behavior has not been found during testing, there is no guarantee it will not occur in the future. Attackers can easily exploit this by making malicious behavior latent: For instance, the previously described assumed malicious SNAPCHAT™ variant would start sending malicious text messages only after some time, or in a specific network, or when no dynamic analysis tool is run, each of which would defeat observation during testing.

Testing alone cannot guarantee the absence of malicious behavior.

### 2.2 Consequences

Program analysis, sandboxing, and test generation are all mature technologies that are sufficiently robust to be applied on a large scale. However, each of them has fundamental limitations-sandboxes need rules, dynamic analysis needs executions, and testing does not provide guarantees. Combining the three, as proposed in the present invention, however, not only mitigates these weaknesses-it even turns them into a strength. The argument is as follows: With modern test generators, one may generate as many executions as needed. These executions can feed dynamic analysis, providing and summarizing insights into what happens in these executions. By construction, these insights are incomplete, and other (in particular malicious) behavior is still possible. The key idea of this invention is to turn the incompleteness of dynamic analysis into a guarantee-namely by having a sandbox enforce that anything not seen yet will not happen. To the best of the inventor's knowledge, this is the first attempt to bring together test generation, dynamic analysis, and sandboxing; their combined strength is leveraged using the present invention.

### 3. Generating App Tests

As discussed in Section 2.1, a number of test generators are now available for the ANDROID™ platform. However, the setting in accordance with the invention differs in two points from traditional test generation, which caused the inventors to create their own tool.

Testing for normality. Traditional testing tools focus on uncovering bugs; and thus, they would strive to cover as many possible behaviors as feasible, in the hope of detecting a defect. In setting considered in the framework of the present invention, the purpose of a test generator is also to cover as many behaviors as possible; however, rather than trying to detect bugs, the aim is to explore normal behavior; the complement, abnormal behavior, would later be detected by the sandbox. Consequently, the implemented DROIDMATE test generator focuses on those user interactions that are most easy to reach, assuming that these lead to the most frequent (and thus "normal") actions.

Third-party testing. Another assumption frequently made by testing tools is that it is the developer who tests; and thus, a certain amount of instrumentation (possibly requiring source code or byte code conversion [17]) or system modification (say, special kernels [21] or root access) could be required. In the setting of the invention, any user may generate tests for any third-party application binary on an unmodified device. DROIDMATE fulfills all these requirements.

### 3.1 DROIDMATE in a Nutshell

In what follows, DROIDMATE's operation is described. Conceptually, DROIDMATE generates tests by interacting with graphical user interface elements (widgets) of the Application under Test (AuT). To this end, DROIDMATE makes use of UI AUTOMATOR [33], a recent framework introduced in ANDROID™ 4.1. At runtime, DROIDMATE extracts the set of currently visible GUI elements, and then interacts with them using UI AUTOMATOR. DROIDMATE starts the exploration by installing on an ANDROID™ device an .apk file containing the AuT and then launching its launchable activity through the ANDROID™ Debug Bridge (ADB), available in the Android™ SDK. From a user's perspective, all this is transparent; the user only has to turn on developer mode (a standard ANDROID™ setting) and then can launch DROIDMATE from a connected PC on a given app. During start, and then again after each generated interaction, DROIDMATE monitors the behavior of the AuT as sensitive APIs are concerned. Specifically, DROIDMATE monitors the sensitive APIs called, their security-relevant parameter values (e.g. ContentProvider URIs) and call stack traces, using the monitoring techniques discussed in Section 4. All interactions conducted up to this point as well as the screens seen during exploration and the monitored values can then used by an exploration strategy to decide which GUI element to interact with next or if to terminate the exploration. The data from the exploration is sufficient to replay the test, either manually or automatically.

### 3.2 Exploration Strategies

In a preferred embodiment, the exploration strategy is simple: one randomly clicks on GUI elements that are visible and set as "clickable" or "checkable" at a given point in time. This includes all buttons and all links. After a predefined amount n of exploration actions, DROIDMATE resets the application (i.e., quits it, if needed, forcefully), and starts anew. If n is set to n = 10 interactions (plus possible initial interactions for logging in and such), after 10 clicks, the application is quit and restarted. This strategy avoids getting stuck in complicated dialog flows, and favors those GUI elements that are quickly reachable after start. DROIDMATE also resets the application if it no longer can interact with it-that is, when it quits, crashes, hangs, or starts another application.

### 3.3 Mining SNAPCHAT™

As an example of how DROIDMATE explores application behavior, the SNAPCHAT™ application may be considered again. Figure 2 lists the number of APIs discovered during testing; the actual APIs (in order of discovery) are listed here below, including the identifiers of the GUI elements that triggered them:
- Right after login (after clicking login button), SNAPCHAT™ checks whether the network is active (API 1, getActiveNetworkInfo()), accesses a HTTP server (API 2, AbstractHttpClient), and opens the camera.
- If one logs in with new username and email, SNAPCHAT™ accesses account info via a URL connection (APIs 6-8).
- Taking a picture (camera take snap button) includes accessing the current location.
- Finally, after 320 seconds of testing, DROIDMATE finds the SNAPCHAT™ "Save image" button, which allows the user to save a taken picture, and thus requires accesses to the image library (APIs 10-13).

Even after running DROIDMATE for several hours, no further sensitive APIs were used. So are these thirteen APIs really all sensitive APIs accessed? This is precisely the problem of testing, which does not give a guarantee of whether all has been seen; and this is why the invention uses sandboxing to exclude other, unseen behavior.

List of the thirteen APIs used by SNAPCHAT™ discovered by DROIDMATE, and the buttons that first trigger them:
login_button:
   1 Android.net.ConnectivityManager.getActiveNetworklnfo()
   2 org.apache.http.impl.client.AbstractHttpClient.execute()
   3 java.net.Socket()
   4 Android.hardware.Camera.open()
   5 Android.location.LocationManager.getLastKnownLocation()
login_username_email:
   6 java.net.URL.openConnection()
   7 java.net.URLConnection()
   8 java.net.Socket()
camera_take_snap_button:
   9 Android.location.LocationManager.isProviderEnabled()
picture_save_pic:
   10 Android.content.ContentResolver.insert()
uri = "content://media/external/images/media"
   11 Android.content.ContentResolver.query()
uri = "content://media/external/images/thumbnails"
   12 Android.content.ContentResolver.openFileDescriptor()
uri = "content://media/external/images/thumbnails/<n>"
   13 Android.content.ContentResolver.insert()
uri = "content://media/external/images/thumbnails"

### 4. Monitoring and Enforcing Usage

Besides the test generator DROIDMATE, the second component used to evaluate the method according to the invention is the BOXMATE component. It implements the sandbox mechanism itself, monitoring (and possibly preventing) program behavior. Just as with test generation, the invention provides a technique that allows any user to handle any third-party application binary on an unmodified device. To this end, the APPGUARD [3] approach by Backes et al. has been followed.

### 4.1 Monitoring in a Nutshell

APPGUARD is a fine-grained policy enforcement framework for untrusted ANDROID™ applications. It takes an untrusted app and user-defined security policies as input and embeds the security monitor into the untrusted app, thereby delivering a secured self-monitoring app. Technically, APPGUARD is built upon callee-site inline reference monitoring (IRM). The key idea of IRM is to redirect method calls to the embedded security monitor and checks whether executing the call is allowed by the security policy. Technically, IRM diverts control flow towards the security monitor by modifying references to security relevant methods in the Dalvik Virtual Machine's internal bytecode representation [34].

As the APPGUARD source code is not publicly available, BOXMATE implements APPGUARD-style IRM on Android™, monitoring all calls to sensitive APIs. While the more sophisticated APPGUARD features were not implemented, such as its automata-based security policies, its protection against forceful extraction of stored secrets, or its interactive interface, these features could easily be added by integrating the full APPGUARD approach into BOXMATE.

The BOXMATE sandbox works in two modes. During mining, it records all calls to sensitive APIs includiong their description; as discussed in Section 3, this recording includes the current call stack as well as security-relevant parameter values. During enforcement, it checks whether the API call is allowed by the sandbox rules; if not, it can either have the call return a mock object (simulating the absence of contacts, locations, etc.), or ask the user for permission, naming the API and possible relevant arguments. If the user declines permission, the call again fails. In APPGUARD, executions only incur a very low overhead (1-21%) for calls to a sensitive method [3]. During test runs, the inventors were not able to measure any impact on the overall runtime either. Therefore the BOXMATE sandbox be may easily used in production.

### 4.2 Sandboxing SNAPCHAT™

As an example of how the BOXMATE sandbox operates, again consider the SNAPCHAT™ saturation curve in Figure 2. Any sensitive API not accessed during testing-that is, any API not listed in Figure 3 would be blocked by the BOXMATE sandbox. Note how the BOXMATE sandbox is already much more fine-grained then, say, the standard ANDROID™ permission model. In the ANDROID™ permission model, for instance, SNAPCHAT™ would simply get arbitrary access to all the camera images. In the BOXMATE model, though, SNAPCHAT™ is only allowed to insert existing camera images; the existing images are neither read nor changed. These are important features to know, and possibly to enforce, too.

### 5. User-Driven Sandboxes

The saturation curve in Figure 2 raises an interesting issue. If SNAPCHAT™ behavior is explored for only 100 seconds, we miss the fact that SNAPCHAT™ can save images to the camera roll. Thus, while all the standard SNAPCHAT™ interaction (messaging, sending images, receiving images, etc.) would not be affected by BOXMATE, saving an image would raise a (false) alarm and require a one-time user confirmation. Although saving one's own pictures is a not too frequent event, and the extra authorization is certainly tolerable, this implies that BOXMATE must mine behavior long enough.

However, if SNAPCHAT™ behavior is explored for more than six minutes, DROIDMATE eventually determines that SNAPCHAT™ can access the image library; consequently, the sandbox will allow this for the future. This avoids a false alarm; however, it also brings the risk that a potentially malicious SNAPCHAT™ variant could now easily store compromising images in the background-and the resulting sandbox would completely miss this behavior. This duality of false alarms (false positives) vs. missed malicious behavior (false negatives) is a common problem in automatic classification. In the described setting, some behavior can fall into four categories, illustrated in Figure 5. Generally, the more benign behavior is seen during mining (true negatives), the fewer false alarms will be encounter during sandboxing. However, if the mined rules overapproximate and thus also allow possible malicious behavior, false negatives may be obtained. On the other hand, if the mined rules are too specific, (say, only allow the exact behavior seen during mining), false positives may be obtained during sandboxing.

### 5.1 Interaction-Specific Access Control

To address the issue of sandboxes that may be too coarse, means to provide an even finer-grained sandbox have been explored. Such a sandbox provides permissions not so much for the app as a whole, but rather to individual features of the app.

There are several ways to decompose a program into individual features. One could restrict resource access only to specific program functions, data or control flows, or conditions as they arise during execution. As it is a preferred goal for the resulting access rules/descriptions to be understandable by regular users, the principle of User-Driven Access Control [26, 30] has been adopted, namely tying access to user-owned resources to user actions in the context of an application. Specifically, during mining, the API usage of an application is associated with the user action that triggered it; the resulting sandbox then only grants access if the same user action was done. Applied to the previously described SNAPCHAT™ example, this means that its "Save image" button, which requires adding an image, is still allowed to do so, whereas all other GUI elements and background processes would not.

To implement user-driven access control, all pairs (*e;m*) of GUI elements *e* and a description of sensitive APIs *m* triggered by activating e are recorded and stored. During mining, these pairs are all saved and during sandboxing, a call to *m* is only permitted if the GUI corresponding associated element e was indeed triggered.

### 6. Assessing Sandboxes

As discussed in Section 5, a tighter sandbox can reduce the risk of false negatives without getting too many false positives. Besides a sandbox that is too coarse, a second risk of false negatives is that the testing process simply may mine malicious behavior without recognizing it as such and thus treats it as permitted. As an example, consider an application that happily tracks your location and sends it to some server; BOXMATE will happily mine this as normal behavior and its sandbox will permit this in the future, too.

BOXMATE can detect and prevent behavior changes, but in the absence of an external specification, it cannot know whether behavior is benign or malicious-and an app that constantly tracks a location can be used for either purpose. However, the sandboxes as mined by BOXMATE can assist in several well-established techniques to assess behavior and establish trust. In particular:
Checking Behavior. Anyone can mine a sandbox from a given app, checking which APIs are being used by which functionality; this alone already gives a nice overview about what the app does and why. Since these rules come from concrete executions, one could easily assess concrete resource identifiers, such as file names, host names, or URLs accessed.

Comparing and Certifying Sandboxes. As users and experts alike can mine sandboxes, they can also publish and compare their findings. This allows for independent certification and revalidation schemes, as well as trust networks. In preferred embodiments of the invention, a shared sandbox repository may be provided, where users can reuse and exchange sandboxes, compare sandbox rules/descriptions, establish trust schemes, and work together in collaboratively mining and merging sandboxes, adopting the best practices from open source software development. Again, anything not detected will automatically be prohibited by the sandbox.

Mining Normal Behavior. Finally, the approach according to the invention has been designed to be easily applicable to arbitrary binaries. This allows for automatically assessing large sets of apps, extracting rules of normal behavior that may even be tied to the app description [15].

A false positive occurs if during normal interaction, users need to confirm that some (benign) API call should take place. In the described setting, this translates into an API called during user interaction, but not during mining. For an assessment, one thus neesd to know or define what "normal" user interaction looks like, and which APIs would be accessed with it. To define "normal" user interaction, manually written automated tests for all applications considered have been used, with the aim of having them cover as much behavior as possible. Tests reflect typical use cases; in SNAPCHAT™, for instance, this would be use cases such as starting the app, selecting a contact, sending a picture to the contact, or sending a video. These tests were written using the same UI AUTOMATOR [33] framework that DROIDMATE uses anyway; to allow for independent assessment and comparison.

The purpose of testing always has been to detect abnormal behavior. In accordance with the invention, testing is given a new purpose, namely to extract normal behavior-a task that testing arguably is much better suited to, and even more so in the security domain. By enforcing the exclusion of behavior not seen during testing, the incompleteness of testing is turned into a guarantee that bad things not seen so far cannot happen. This guarantee proved to work well in practice.

This work was funded by a European Research Council (ERC) Advanced Grant "SPECMATE-Specification Mining and Testing".

### References

[1] AU, K. W. Y., ZHOU, Y. F., HUANG, Z., GILL, P., AND LIE, D. Short paper: A look at smartphone permission models. In Proceedings of the 1st ACM Workshop on Security and Privacy in Smartphones and Mobile Devices (New York, NY, USA, 2011), SPSM '11, ACM, pp. 63-68.
[2] AU, K. W. Y., ZHOU, Y. F., HUANG, Z., AND LIE, D. PScout: Analyzing the Android™ permission specification. In Proceedings of the 2012 ACM Conference on Computer and Communications Security (New York, NY, USA, 2012), CCS '12, ACM, pp. 217-228.
[3] BACKES, M., GERLING, S., HAMMER, C., MAFFEI, M., AND VON STYP-REKOWSKY, P. Appguard fine-grained policy enforcement for untrusted Android™ applications. In Data Privacy Management and Autonomous Spontaneous Security, J. Garcia- Alfaro, G. Lioudakis, N. Cuppens-Boulahia, S. Foley, and W. M. Fitzgerald, Eds., Lecture Notes in Computer Science. Springer Berlin Heidelberg, 2014, pp. 213-231.
[4] BARTEL, A., KLEIN, J., LE TRAON, Y., AND MONPERRUS, M. Automatically securing permission-based software by reducing the attack surface: An application to Android™. In Proceedings of the 27th IEEE/ACM International Conference on Automated Software Engineering (New York, NY, USA, 2012), ASE 2012, ACM, pp. 274-277.
[5] BIERMA, M., GUSTAFSON, E., ERICKSON, J., FRITZ, D., AND CHOE, Y. R. Andlantis: Large-scale Android™ dynamic analysis. CoRR abs/1410.7751 (2014).
[6] BLASING, T., BATYUK, L., SCHMIDT, A.-D., CAMTEPE, S., AND ALBAYRAK, S. An Android™ application sandbox system for suspicious software detection. In Malicious and Unwanted Software (MALWARE), 2010 5th International Conference on (Oct 2010), pp. 55-62.
[7] BURGUERA, I., ZURUTUZA, U., AND NADJM-TEHRANI, S. Crowdroid: Behavior-based malware detection system for Android™. In Proceedings of the 1st ACM Workshop on Security and Privacy in Smartphones and Mobile Devices (New York, NY, USA, 2011), SPSM '11, ACM, pp. 15-26.
[8] CHANDOLA, V., BANERJEE, A., AND KUMAR, V. Anomaly detection: A survey. ACM Comput. Surv. 41, 3 (July 2009), 15:1- 15:58.
[9] ENCK, W., GILBERT, P., CHUN, B.-G., COX, L. P., JUNG, J., MCDANIEL, P., AND SHETH, A. N. TaintDroid: An information-flow tracking system for realtime privacy monitoring on smartphones. In Proceedings of the 9th USENIX Conference on Operating Systems Design and Implementation (Berkeley, CA, USA, 2010), OSDI'10, USENIX Association, pp. 1-6.
[10] FELT, A. P., CHIN, E., HANNA, S., SONG, D., AND WAGNER, D. Android™ permissions demystified. In Proceedings of the 18th ACM Conference on Computer and Communications Security (New York, NY, USA, 2011), CCS '11, ACM, pp. 627-638.
[11] FELT, A. P., HA, E., EGELMAN, S., HANEY, A., CHIN, E., AND WAGNER, D. Android™ permissions: User attention, comprehension, and behavior. In Proceedings of the Eighth Symposium on Usable Privacy and Security (New York, NY, USA, 2012), SOUPS '12, ACM, pp. 3:1-3:14.
[12] FORREST, S., HOFMEYR, S. A., SOMAYAJI, A., AND LONGSTAFF, T. A. A sense of self for Unix processes. In Proceedings of the 1996 IEEE Symposium on Security and Privacy (Washington, DC, USA, 1996), SP '96, IEEE Computer Society, pp. 120-.
[13] GODEFROID, P., LEVIN, M. Y., AND MOLNAR, D. Automated whitebox fuzz testing. In Proceedings of Network and Distributed Systems Security (NDSS 2008) (July 2008), pp. 151-166.
[14] GODEFROID, P., LEVIN, M. Y., AND MOLNAR, D. Sage: Whitebox fuzzing for security testing. Queue 10, 1 (Jan. 2012), 20:20-20:27.
[15] GORLA, A., TAVECCHIA, I., GROSS, F., AND ZELLER, A. Checking app behavior against app descriptions. In Proceedings of the 36th International Conference on Software Engineering (New York, NY, USA, 2014), ICSE 2014, ACM, pp. 1025-1035.
[16] GOSH, A. K., WANKEN, J., AND CHARRON, F. Detecting anomalous and unknown intrusions against programs. In Proceedings of the 14th Annual Computer Security Applications Conference (Washington, DC, USA, 1998), ACSAC '98, IEEE Computer Society, pp. 259-.
[17] HAO, S., LIU, B., NATH, S., HALFOND, W. G., AND GOVINDAN, R. PUMA: Programmable UI-automation for large-scale dynamic analysis of mobile apps. In Proceedings of the 12th Annual International Conference on Mobile Systems, Applications, and Services (New York, NY, USA, 2014), MobiSys '14, ACM, pp. 204-217.
[18] HU, C., AND NEAMTIU, I. Automating GUI testing for Android™ applications. In Proceedings of the 6th International Workshop on Automation of Software Test (New York, NY, USA, 2011), AST'11, ACM, pp. 77-83.
[19] HU, W., LIAO, Y., AND VEMURI, V. R. Robust anomaly detection using support vector machines. In In Proceedings of the International Conference on Machine Learning (2003), Morgan Kaufmann Publishers Inc, pp. 282-289.
[20] LEE, W., STOLFO, S. J., AND CHAN, P. K. Learning patterns from Unix process execution traces for intrusion detection. In AAAI Workshop on AI Approaches to Fraud Detection and Risk Management (1997), AAAI Press, pp. 50-56.
[21] MACHIRY, A., TAHILIANI, R., AND NAIK, M. Dynodroid: An input generation system for Android™ apps. In Proceedings of the 2013 9th Joint Meeting on Foundations of Software Engineering (New York, NY, USA, 2013), ESEC/FSE 2013, ACM, pp. 224-234.
[22] MAHMOOD, R., ESFAHANI, N., KACEM, T., MIRZAEI, N., MALEK, S., AND STAVROU, A. A whitebox approach for automated security testing of Android™ applications on the cloud. In Proceedings of the 7th International Workshop on Automation of Software Test (Piscataway, NJ, USA, 2012), AST '12, IEEE Press, pp. 22-28.
[23] MILLER, B. P., FREDRIKSEN, L., AND SO, B. An empirical study of the reliability of UNIX utilities. Commun. ACM 33, 12 (Dec. 1990), 32-44.
[24] Monkey: Ui/application exerciser. http://developer. Android™.com/tools/help/monkey.html. Retrieved 2015- 02-01.
[25] NEUNER, S., VAN DER VEEN, V., LINDORFER, M., HUBER, M., MERZDOVNIK, G., MULAZZANI, M., AND WEIPPL, E. R. Enter sandbox: Android™ sandbox comparison. CoRR abs/1410.7749 (2014).
[26] ROESNER, F., KOHNO, T., MOSHCHUK, A., PARNO, B., WANG, H. J., AND COWAN, C. User-driven access control: Rethinking permission granting in modern operating systems. In Proceedings of the 2012 IEEE Symposium on Security and Privacy (Washington, DC, USA, 2012), SP '12, IEEE Computer Society, pp. 224-238.
[27] SALTZER, J., AND SCHROEDER, M. The protection of information in computer systems. Proceedings of the IEEE 63, 9 (Sept 1975), 1278-1308.
[28] SEKAR, R., BENDRE, M., DHURJATI, D., AND BOLLINENI, P. A fast automaton-based method for detecting anomalous program behaviors. In Proceedings of the 2001 IEEE Symposium on Security and Privacy (Washington, DC, USA, 2001), SP '01, IEEE Computer Society, pp. 144-.
[29] SHABTAI, A., KANONOV, U., ELOVICI, Y., GLEZER, C., AND WEISS, Y. "andromaly": a behavioral malware detection framework for Android™ devices. Journal of Intelligent Information Systems 38, 1 (2012), 161-190.
[30] SHIRLEY, J., AND EVANS, D. The user is not the enemy: Fighting malware by tracking user intentions. In Proceedings of the 2008 Workshop on New Security Paradigms (New York, NY, USA, 2008), NSPW '08, ACM, pp. 33-45.
[31] SOMMER, R., AND PAXSON, V. Outside the closed world: On using machine learning for network intrusion detection. In Proceedings of the 2010 IEEE Symposium on Security and Privacy (Washington, DC, USA, 2010), SP '10, IEEE Computer Society, pp. 305-316.
[32] SUTTON, M. And the mice will "play"... : App stores and the illusion of control part II. http://research.zscaler.com/2014/07/and-mice-will-play-app-stores-and.html, July 2014. Retrieved 2015-02-01.
[33] Ui automator: Ui testing. http://developer.AndroidTM.com/ tools/testing/testing_ui.html. Retrieved 2015-02-10.
[34] VON STYP-REKOWSKY, P., GERLING, S., BACKES, M., AND HAMMER, C. Idea: Callee-site rewriting of sealed system libraries. In Engineering Secure Software and Systems, J. Jrjens, B. Livshits, and R. Scandariato, Eds., vol. 7781 of Lecture Notes in Computer Science. Springer Berlin Heidelberg, 2013, pp. 33-41.

## Claims

1. A method of analyzing the behavior of a computer program (130), the computer program being executable in an operating system by processing means (110) of a computing device (100), wherein the execution of predetermined parts of the computer program is triggered by events of at least one interface of the computer program, and leads the computer program to request access to computing resources, which are accessible by said computing device, the method comprising the steps of:
a) executing the computer program (130) by processing means (110) of a computing device (100);
b) using said processing means (110) to automatically generate a plurality of events of said at least one interface;
**characterized by** the further steps:
c) identifying for each generated event, using said processing means (110), to which computing resources the computer program (130) requests access as a consequence of the event;
d) storing, for each event, a description of the identified computing resources in a memory element (120), thereby associating the identified computing resources with the event;
e) providing an input to the computer program (130) on at least one interface thereof, which results in an event triggering the execution of a predetermined part of the computer program;
f) identifying, for said event, using said processing means (110), the computing resources to which the computer program requests access as a consequence of the event;
g) comparing a description of the identified computing resources to all of the descriptions of computing resources associated with said event in said memory element (120);
h) if an associated description, which at least partially matches the description of the identified computing resources, is found in said memory element, concluding that the computer program (130) exhibits a first behavior;
i) if no such associated description is found, concluding that the computer program (130) exhibits a second behavior, which is different from said first behavior.

2. The method according to claim 1, wherein in step (h) the method concludes that the computer program exhibits said first behavior only if the description of the identified computing resources matches one of the descriptions associated with said event in said memory element.

3. The method according to any of claims 1 or 2, wherein step (i) comprises blocking the requested access of the computer program to the identified computing resources.

4. The method according to any of claims 1 to 3, wherein step (i) comprises updating the computing resources associated with said event in said memory element using the newly identified computing resources.

5. The method according to any of claims 1 to 4, wherein the input provided in step (e) is a user input.

6. The method according to any of claims 1 to 5, wherein said computing resources comprise any of a file system, file system descriptor, storage means, networking means, imaging means, processing means, display means or printing means.

7. The method according to any of claims 1 to 6, wherein said interfaces comprise a Graphical User Interface, GUI, and wherein said events comprise any of a mouse-click event, a text-entry event, a key-stroke event, a choice event, or any combination thereof.

8. The method according to any of claims 1 to 7, wherein said interfaces comprise a networking interface and/or a sensor interface.

9. The method according to any of claims 1 to 8 wherein said identification of computing resources comprises identifying at least one call by the computer program to an Application Programming Interface, API, routine of the operating system, said routine providing access to a computing resource.

10. The method according to any of claims 1 to 9, wherein in step (b) the generated events are randomly generated.

11. The method according to any of claims 1 to 10, wherein the description of said computing resources, which is stored in said memory element in step (d), comprises a binary or textual representation.

12. A computer program comprising instructions, which when run on a computer, causes the computer to carry out the method according to any of claims 1 to 11.

13. A computer program product comprising a computer-readable medium on which the computer program according to claim 12 is stored.

14. A computer configured to carry out the method according to any of claims 1 to 11.

15. A computing device (100) comprising processing means (110) and a memory element (120), said processing means being configured to execute the method according to any of claims 1 to 11.

## Patentansprüche

1. Ein Verfahren zur Analyse des Verhaltens eines Computerprogramms (130), das Computerprogramm in einem Betriebssystem mit Verarbeitungsmitteln (110) eines Computergerätes (100) ausführbar ist, wobei die Ausführung von vorgegebenen Teilen des Computerprogramms durch Ereignisse von mindestens einer Schnittstelle des Computerprogramms ausgelöst wird und das Computerprogramm dazu führt, Zugriff auf Computer-Ressourcen, die durch das Computergerät zugänglich sind, zu fordern, das Verfahren umfassend die Schritte:
a) die Ausführung des Computerprogramms (130) mit Verarbeitungsmitteln (110) eines Computergerätes (100);
b) die Verwendung besagter Verarbeitungsmittel (110), um automatisch eine Vielzahl von Ereignissen von mindestens einer Schnittstelle zu erzeugen;
durch die weiteren Schritte gekennzeichnet:
c) die Identifizierung für jedes generierte Ereignis, mit besagten Verarbeitungsmitteln (110), von welchen Computer-Ressourcen, auf die das Computerprogramm (130) als Folge des Ereignisses Zugriff fordert;
d) das Speichern für jedes Ereignis einer Beschreibung der identifizierten Computer-Ressourcen in einem Speicherelement (120) und dadurch das Assoziieren der identifizierten Computer-Ressourcen mit dem Ereignis;
e) das Bereitstellen einer Eingabe des Computerprogramms (130) auf mindestens einer Schnittstelle davon, was zu einem Ereignis führt, das die Ausführung eines vorgegebenen Teils des Computerprogramms auslöst;
f) die Identifizierung, für besagtes Ereignis und mit den Verarbeitungsmitteln (110), der Computer-Ressourcen, auf die das Computerprogramm als Folge des Ereignisses Zugriff hat;
g) das Vergleichen einer Beschreibung der identifizierten Computer-Ressourcen mit allen der Beschreibungen von Rechenressourcen, die mit diesem Ereignis in diesem Speicherelement assoziiert sind (120);
h) wenn eine assoziierte Beschreibung, die zumindest teilweise mit der Beschreibung der identifizierten Computer-Ressourcen übereinstimmt, in besagtem Speicherelement zu finden ist, zu dem Schluss kommen, dass das Computerprogramm (130) ein erstes Verhalten aufweist;
i) wenn keine solche assoziierte Beschreibung gefunden wird, zu dem Schluss kommen, dass das Computerprogramm (130) ein zweites Verhalten aufweist, das sich von dem ersten Verhalten unterscheidet.

2. Das Verfahren nach Anspruch 1, wobei das Verfahren im Schritt (h) zu dem Schluss kommt, dass das Computerprogramm das erste Verhalten nur dann ausweist, wenn die Beschreibung der identifizierten Computer-Ressourcen einer der Beschreibungen entspricht, die mit besagtem Ereignis in besagtem Speicherelement assoziiert sind.

3. Das Verfahren nach irgendeinem von Ansprüchen 1 oder 2, wobei der Schritt (i) das Blockieren des geforderten Zugriffs des Computerprogramms auf die identifizierten Computer-Ressourcen umfasst.

4. Das Verfahren nach irgendeinem von Ansprüchen 1 bis 3, wobei der Schritt (i) die Aktualisierung der mit dem Ereignis assoziierten Computer-Ressourcen in besagtem Speicherelement mit den neu identifizierten Computer-Ressourcen umfasst.

5. Das Verfahren nach irgendeinem von Ansprüchen 1 bis 4, wobei die Eingabe in Schritt (e) eine Benutzereingabe ist.

6. Das Verfahren nach irgendeinem von Ansprüchen 1 bis 5, wobei besagte Computer-Ressourcen irgendein von einem Dateisystem, Dateisystemdeskriptor, Speichermitteln, Netzwerkmitteln, Bildmitteln, Verarbeitungsmitteln, Anzeige-oder Druckmitteln umfassen.

7. Das Verfahren nach irgendeinem von Ansprüchen 1 bis 6, wobei besagte Schnittstellen eine grafische Benutzeroberfläche, GUI, umfassen, und besagte Ereignisse irgendein von einem Mausklick, Text-Entry-Event, Tastenstich-Ereignis, Auswahlereignis oder einer Kombination davon umfassen.

8. Das Verfahren nach irgendeinem von Ansprüchen 1 bis 7, wobei besagte Schnittstellen eine Netzwerkschnittstelle und/oder eine Sensorschnittstelle umfassen.

9. Das Verfahren nach irgendeinem von Ansprüchen 1 bis 8, wobei besagte Identifizierung der Computer-Ressourcen die Identifizierung von mindestens einem Aufruf des Computerprogramms zu einer Programmierschnittstelle, API, Routine des Betriebssystems, wobei besagte Routine Zugriff auf eine Computer-Ressource bereitstellt, umfassen.

10. Das Verfahren nach irgendeinem von Ansprüchen 1 bis 9, wobei im Schritt (b) die erzeugten Ereignisse zufällig erzeugt werden.

11. Das Verfahren nach irgendeinem von Ansprüchen 1 bis 10, wobei die Beschreibung besagter Computer-Ressourcen, die im besagten Speicherelement im Schritt (d) gespeichert ist, eine binäre oder textliche Darstellung umfasst.

12. Ein Computerprogramm, das Anweisungen umfasst, die, wenn sie auf einem Computer ausgeführt werden, dazu führen, dass der Computer das Verfahren nach irgendeinem von Ansprüchen 1 bis 11 durchführt.

13. Ein Computerprogrammprodukt, das ein computerlesbares Medium umfasst, auf dem das Computerprogramm nach Anspruch 12 gespeichert ist.

14. Ein Computer, der derart konfiguriert ist, dass er das Verfahren nach irgendeinem von Ansprüchen 1 bis 11 durchführt.

15. Ein Rechengerät (100), das Verarbeitungsmittel (110) und ein Speicherelement (120) umfasst, wobei besagte Verarbeitungsmittel derart konfiguriert sind, um das Verfahren nach irgendeinem von Ansprüchen 1 bis 11 auszuführen.

## Revendications

1. Procédé d'analyse du comportement d'un programme informatique (130), le programme informatique pouvant être exécuté dans un système d'exploitation par l'intermédiaire de moyens de traitement (110) d'un dispositif informatique (100) ; dans lequel l'exécution de parties prédéterminées du programme informatique est déclenchée par des événements d'au moins une interface du programme informatique et fait en sorte que le programme informatique demande l'accès à des ressources de calcul auxquelles a accès le dispositif informatique, le procédé comprenant les étapes consistant à :
a) exécuter le programme informatique (130) par l'intermédiaire de moyens de traitement (110) d'un dispositif informatique (100) ;
b) utiliser lesdits moyens de traitement (110) dans le but de générer de manière automatique un certain nombre d'événements de ladite au moins une interface ;
**caractérisé par** les étapes supplémentaires consistant à :
c) identifier, pour chaque événement généré, en utilisant lesdits moyens de traitement (110), à quelles ressources de calcul le programme informatique (130) demande l'accès, suite à l'événement ;
d) mettre en mémoire, pour chaque événement, une description des ressources de calcul identifiées dans un élément (120) faisant office de mémoire, en associant par là même les ressources de calcul identifiées à l'événement ;
e) fournir une entrée au programme informatique (130) sur au moins une interface de ce dernier, ce qui donne lieu à un événement déclenchant l'exécution d'une partie prédéterminée du programme informatique ;
f) identifier, pour ledit événement, en utilisant lesdits moyens de traitement (110), à quelles ressources de calcul le programme informatique demande l'accès, suite à l'événement ;
g) comparer une description des ressources de calcul identifiées à toutes les descriptions de ressources de calcul associées audit événement dans ledit élément (120) faisant office de mémoire ;
h) lorsqu'une description associée, qui correspond au moins en partie à la description des ressources de calcul identifiées, est trouvée dans ledit élément faisant office de mémoire, en conclure que le programme informatique (130) manifeste un premier comportement ;
i) lorsqu'aucune description associée de ce type n'est trouvée, en conclure que le programme informatique (130) manifeste un second comportement, qui est différent dudit premier comportement.

2. Procédé selon la revendication 1, dans lequel, à l'étape (h), le procédé tire comme conclusion que le programme informatique manifeste ledit premier comportement, uniquement lorsque la description des ressources de calcul identifiées correspond à une des descriptions associées audit événement dans ledit élément faisant office de mémoire.

3. Procédé selon l'une quelconque des revendications 1 ou 2, dans lequel l'étape (i) comprend le blocage de l'accès demandé par le programme informatique aux ressources de calcul identifiées.

4. Procédé selon l'une quelconque des revendications 1 à 3, dans lequel l'étape (i) comprend la mise à jour des ressources de calcul associées audit événement dans ledit élément faisant office de mémoire, en utilisant les ressources de calcul nouvellement identifiées.

5. Procédé selon l'une quelconque des revendications 1 à 4, dans lequel l'entrée fournie à l'étape (e) est une entrée utilisateur.

6. Procédé selon l'une quelconque des revendications 1 à 5, dans lequel lesdites ressources de calcul comprennent n'importe quelle ressource choisie parmi un système de gestion de fichiers, un descripteur de système de gestion de fichiers, un moyen de stockage, un moyen de mise en réseau, un moyen de formation d'images, un moyen de traitement, un moyen d'affichage ou un moyen d'impression.

7. Procédé selon l'une quelconque des revendications 1 à 6, dans lequel lesdites interfaces comprennent une interface utilisateur graphique, GUI ; et dans lequel lesdits événements comprennent n'importe quel événement choisi parmi un événement sous la forme d'un clic de souris, un événement sous la forme d'une saisie de texte, un événement sous la forme d'une pression de touche, un événement sous la forme d'une option, ou l'une quelconque de leurs combinaisons.

8. Procédé selon l'une quelconque des revendications 1 à 7, dans lequel lesdites interfaces comprennent une interface de mise en réseau et/ou une interface de détection.

9. Procédé selon l'une quelconque des revendications 1 à 8, dans lequel ladite identification de ressources de calcul comprend l'identification d'au moins un appel de la part du programme informatique à un programme d'interface de protocole d'application, API, du système d'exploitation, ledit programme fournissant un accès à une ressource de calcul.

10. Procédé selon l'une quelconque des revendications 1 à 9, dans lequel, à l'étape (b), les événements générés sont générés de manière aléatoire.

11. Procédé selon l'une quelconque des revendications 1 à 10, dans lequel la description desdites ressources de calcul, qui sont enregistrées dans ledit élément faisant office de mémoire à l'étape (d), comprend une représentation binaire ou textuelle.

12. Programme informatique comprenant des instructions qui, lorsqu'elles sont exécutées sur un ordinateur, font en sorte que l'ordinateur met en oeuvre le procédé selon l'une quelconque des revendications 1 à 11.

13. Produit de programme informatique comprenant un support lisible par ordinateur, sur lequel est stocké le programme informatique selon la revendication 12.

14. Ordinateur configuré pour la mise en oeuvre du procédé selon l'une quelconque des revendications 1 à 11.

15. Dispositif informatique (100) comprenant des moyens de traitement (110) et un élément (120) faisant office de mémoire, lesdits moyens de traitement étant configurés pour la mise en oeuvre du procédé selon l'une quelconque des revendications 1 à 11.
